# EUROPEAN PATENT SPECIFICATION

(11) **EP 0 705 283 B1**
(45) Date of publication and mention of the grant of the patent: **13.01.1999**
(21) Application number: 93916743.3
(22) Date of filing: 24.06.1993
(51) Int. Cl.: C08F 10/00, C08F 4/64

(54) **PROCESS FOR PRODUCING AMORPHOUS POLY-$g(a)-OLEFINS WITH A MONOCYCLOPENTADIENYL TRANSITION METAL CATALYST SYSTEM**
VERFAHREN ZUR HERSTELLUNG VON POLY-ALPHA-OLEFINEN MIT MONOZYKLOPENTADIENYLKOMPLEXEN VON ÜBERGANGSMETALLEN
PROCEDE DE PRODUCTION DE POLY-ALPHA-OLEFINES AMORPHES AU MOYEN D'UN CATALYSEUR A METAL DE TRANSITION DE MONOCYCLOPENTADIENYLE

(43) Date of publication of application: 10.04.1996
(73) Proprietor: EXXON CHEMICAL PATENTS INC., Baytown, TX 77520-5200 (US)
(72) Inventor: CANICH, Jo, Ann, Marie, Houston, TX 77058 (US)
(74) Representative: Dew, Melvyn John
(86) International application number: US9306051
(87) International publication number: WO9500562

(56) References cited:
- EP-A- 0 416 815
- WO-A-92/05204
- WO-A-93/12151
- WO-A-93/19103

## Description

### FIELD OF THE INVENTION

This invention relates to a process for polymerizing α-olefins which utilizes certain monocyclopentadienyl metal compounds of a Group IV B transition metal of the Periodic Table of Elements in an alumoxane activated catalyst system to produce, amorphous, and low crystallinity poly-α-olefins, particularly polypropylene and α-olefin copolymers of propylene. In U.S. Patent No. 5,026,798 an invention was disclosed and claimed for a process for production of crystalline poly-α-olefins. It has further been discovered that by careful choice of the components of the monocyclopentadienyl metal compounds that the same process can also be used to elegantly produce amorphous poly-α-olefins that may have stereoregular regions within the polymer chain.

### BACKGROUND OF THE INVENTION

As is well known, various processes and catalysts exist for the homopolymerization or copolymerization of olefins. For some applications it is of primary importance for a polyolefin to have a high weight average molecular weight while having a relatively narrow molecular weight distribution. A high weight average molecular weight, (M_{w}), when accompanied by a narrow molecular weight distribution, (MWD), provides a polyolefin with high strength properties. For other applications, such as compatibilization or adhesion, a low or medium weight average M_{w} with a relatively narrow MWD is a primary concern.

Suggestions have appeared that mono and tris(cyclopentadienyl) transition metal compounds may also be useful. See, for example U.S. Patent Nos. 4,522,982; 4,530,914 and 4,701,431. Such mono(cyclopentadienyl) transition metal compounds as have heretofore been suggested as candidates for an alumoxane activated catalyst system are mono(cyclopentadienyl) transition metal trihalides and trialkyls.

More recently, International Publication No. WO 87/03887 describes the use of a composition comprising a transition metal coordinated to at least one cyclopentadienyl and at least one heteroatom ligand as a transition metal component for use in an alumoxane activated catalyst system for α-olefin polymerization. The composition is broadly defined as a transition metal, preferably of Group IV B of the Periodic Table, which is coordinated with at least one cyclopentadienyl ligand and one to three heteroatom ligands, the balance of the transition metal coordination requirement being satisfied with cyclopentadienyl or hydrocarbyl ligands. catalyst systems described by this reference are illustrated solely with reference to transition metal compounds which are metallocenes, i.e., bis(cyclopentadienyl) Group Iv B transition metal compounds.

It is desirable that a catalyst be discovered which will be capable of catalyzing the polymerization of α-olefin monomer(s) to produce a stereoregular low crystallinity or amorphous form of poly-α-olefin when desired.

There are at least three different types of stereoregular polymers. These polymers are comprised of α-olefin monomers where hydrocarbyl groups are pendant from the polymer backbone chain. Relative to the polymer backbone chain, the pendant hydrocarbyl groups may be arranged in different stereochemical configurations which are denominated as, for example, atactic, isotactic, or syndiotactic pendant group configuration.

The degree and type of tacticity of a polyolefin molecule are critical determinants of the physical properties which a resin composed of such polymer molecules will exhibit. Other critical determinants of the properties which a resin will exhibit are the type and relative concentration of monomers and comonomers, the weight average molecular weight (M_{w}) of the polymer molecules comprising the resin bulk, the molecular weight distribution (MWD) and the composition distribution of the resin.

Important from a commercial standpoint is the rate or productivity at which a catalyst system will produce a poly-α-olefin resin of a desired set of properties in terms of tacticity, weight average molecular weight and molecular weight distribution.

The weight average molecular weight (M_{w}) of a poly-α-olefin is an important physical property determinant of the practical uses to which such polymer can be put. For end use applications which require high strength and low creep, the M_{w} of such a resin must generally be in excess of 100,000. Where the M_{w} is lower than 100,000 the polymer can be used for other applications such as adhesives and compatibilizers. Further, for such high strength applications, the poly-α-olefin resin must generally have a high degree of crystallinity. Low crystallinity and amorphous poly-α-olefins are useful in adhesive compositions, in compatibilizing applications, as additives, etc. The degree of crystallinity which a poly-α-olefin is capable of obtaining is, in major part, determined by the stereochemical regularity of the hydrocarbyl groups which are pendent to the polymer molecule backbone, i.e., the tacticity of the polymer.

Five types of tacticity have been described in poly-α-olefins: atactic, normal isotactic, isotactic stereoblock, syndiotactic, and hemiisotactic. Although all of these tacticity configurations have been primarily demonstrated in the case of polypropylene, in theory each is equally possible for polymers comprised of any α-olefin, cyclic olefin or internal olefin.

Atactic poly-α-olefins are those wherein the hydrocarbyl groups pendent to the polymer molecule backbone assume no regular order with reference to the backbone. This random, or atactic, structure is represented by a polymer backbone of alternating methylene and methine carbons, with randomly oriented branches substituting the methine carbons. The methine carbons randomly have R and S configurations, creating adjacent pairs either of like configuration (a "meso" or "m" dyad) or of unlike configuration (a "racemic" or "r" dyad). The atactic form of a polymer contains approximately equal fractions of meso and racemic dyads. Atactic poly-α-olefins, particularly atactic polypropylene, are soluble in aliphatic and aromatic solvents at ambient temperature. Since atactic polymers exhibit no regular order or repeating unit configurations in the polymer chain, such atactic polymers are amorphous materials. An amorphous material tends to lack a molecular lattice structure and have poorly defined melting points. Thus typical atactic poly-α-olefins are amorphous, and generally have no measurable melting point. Atactic polymers exhibit little if any crystallinity, hence they are generally unsuitable for high strength applications regardless of the weight average molecular weight of the resin.

Amorphous poly-α-olefins, generally regarded to be atactic, noncrystalline and lacking in a molecular lattice structure which is characteristic of the solid state, tend to lack well defined melting points. Such amorphous poly-α-olefins have uses in adhesives and as compatibilizers among other things.

For any of the above described materials the final resin properties and their suitability for particular applications depends on the type of tacticity, (stereoregularity), the melting point, the average molecular weight, the molecular weight distribution, the type and level of monomer and comonomer, the sequence distribution, and the presence or absence of head or end group functionality. Accordingly, the catalyst system by which such a atactic poly-α-olefin resin is to be produced should, desirably, be versatile in terms of M_{w}, MWD, tacticity type and level, and comonomer choice. Further, the catalyst system should be capable of producing these polymers with or without head and/or end group functionality, such as olefinic unsaturation. Still further, such catalyst system must be capable, as a commercially practical constraint, of producing such resins at an acceptable production rate. Most preferably, the catalyst system should be one which, at its productivity rate, provides a resin product which does not require a subsequent treatment to remove catalyst residue to a level which is acceptable for the resin in the end use application desired. Finally, an important feature of a commercial catalyst system is its adaptability to a variety of processes and conditions.

In methylalumoxane/metallocene catalyst systems the polymer characteristics (Mw, MWD, tacticity type, comonomer incorporation, etc.) are controlled either by modifications to the structure of the metallocene precursor or by adjustment of the process conditions (temperature, pressure, concentrations). In general, adjustment of process conditions does not allow independent control of tacticity level, Mw and comonomer content. Addition of chain transfer agents such as hydrogen gas to the reactor gives lower molecular weight products without affecting tacticity, however, the resulting polymer no longer has unsaturated end groups. End group functionalization is often an important feature in the application of low molecular weight polymers. Given these limitations, one must prepare a wide variety of differently substituted metallocene precursors to access the entire range of desired materials.

EP-A-416815 discloses the use of a broad range of mono cyclopentadienyl metallocene compounds with alumoxane for polymerizing a wide range of monomers. Example 1 produces atactic polypropylene but the molecular weight using a zirconium metallocene compound is not stated. EP-A-416815 neither teaches nor suggests the use of the titanium metallocene species to provide high molecular weight atactic polypropylene.

US-A-5055438 also disdoses the use of a broad range of mono cyclopentadienyl metallocene compounds with alumoxane for polymerizing a wide range of monomers but there is no teaching for the production of high molecular weight atactic polypropylene.

WO93/12151 discloses the use of a broad range of mono cyclopentadienyl metallocene compounds with alumoxane for polymerizing a wide range of monomers but there is no disclosure for the making of atactic polypropylene.

WO93/19103 and in particular Example 13 while disdosing the production of high molecular weight isotactic polypropylene uses a process with a catalyst not incorporating alumoxane.

In view of the difficulty and practical limitations in the synthesis of bridged metallocene complexes necessary for the production of an alumoxane activated metallocene catalyst system capable of producing poly-α-olefins, it would be desirable to develop new catalytic processes which could produce high or low molecular weight, tactic, amorphous poly-α-olefins or low crystallinity poly-α-olefins of relatively narrow MWD.

### SUMMARY OF THE INVENTION

The process of this invention employs a catalyst system previously disclosed in U.S. Patent No. 5,055,438, issued October 8, 1991, which is comprised of a transition metal component from Group IV B of the Periodic Table of the Elements (CRC Handbook of chemistry and Physics, 68th ed. 1987-1988) and an alumoxane component. The catalyst system may be employed in solution, slurry, gas phase or bulk phase polymerization procedure to produce poly-α-olefins of high or low weight average molecular a weight and relatively narrow molecular weight distribution. The present invention relates to using the catalyst of U.S. Patent No. 5,055,438 to produce atactic amorphous poly-α-olefins of a weight average molecular weight in excess of 100 000 and narrow MWD. Atactic, amorphous poly-α-olefin is herein defined to mean a poly-α-olefin that lacks or has a poorly defined melting point and may or may not have low amounts of crystallinity. The amorphous product of this invention is substantially, preferably completely, atactic.

The catalyst of this invention comprises a Group IVB transition metal component with a symmetrically substituted cyclopentadienyl ring and an alumoxane. The "Group IV B transition metal component" of the catalyst system is represented by the formula: 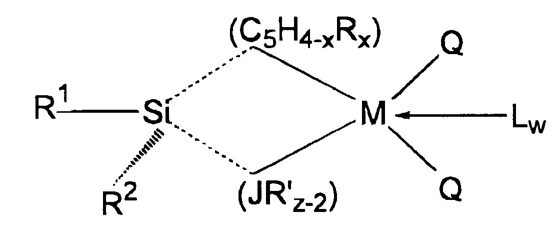 wherein: M is Ti in its highest formal oxidation state (+4, d⁰ complex) ;
(C₅H₄₋ₓRₓ) is a cyclopentadienyl ring which is symmetrically substituted with two or four substituent groups R, "x" is 2, or 4 denoting the degree of substitution, and each substituent group R is, independently, a radical selected from a group consisting of C₁-C₂₀ hydrocarbyl radicals, substituted C₁-C₂₀ hydrocarbyl radicals wherein one or more hydrogen atoms is replaced by a halogen radical, an amido radical, a phosphido radical, an alkoxy radical or any other radical containing a Lewis acidic or basic functionality, C₁-C₂₀ hydrocarbyl-substituted metalloid radicals wherein the metalloid is selected from the Group IV A of the Periodic Table of Elements; and halogen radicals, amido radicals, phosphido radicals, alkoxy radicals, aklylborido radicals or any other radical containing Lewis acidic or basic functionality; or (C₅H₄₋ₓRₓ) is a cyclopentadienyl ring in which at least two adjacent R-groups are joined forming a C₄-C₂₀ ring to give a saturated or unsaturated polycyclic cyclopentadienyl ligand such as indenyl, tetrahydroindenyl.
Symmetrical substitution exists when two R groups of approximately equal steric bulk are substituted at symmetric sites, i.e. 2,5: 3,4; etc.). A C₄-C₂₀ ring can be considered symmetrically balanced with the bridging group, T.

(JR'_{z-2}) is a heteroatom ligand in which J is an element with a coordination number of three from Group V A or an element with a coordination number of two from Group VI A of the Periodic Table of Elements, preferably nitrogen, phosphorus, oxygen or sulfur, and each R' is, independently a radical selected from a group consisting of C₁-C₂₀ hydrocarbyl radicals, substituted C₁-C₂₀ hydrocarbyl radicals wherein one or more hydrogen atoms are replaced by a halogen radical, an amido radical, a phosphido radical, an alkoxy radical or any other radical containing a Lewis acidic or basic functionality, and "z" is the coordination number of the element J;
each Q may be independently any univalent anionic ligand such as a halide, hydride, or substituted or unsubstituted C₁-C₂₀ hydrocarbyl, alkoxide, aryloxide, amide, arylamide, phosphide or arylphosphide, provided that where any Q is a hydrocarbyl such Q is different from (C₅H₄₋ₓRₓ), or both Q together may be an alkylidene or a cyclometallated hydrocarbyl or any other divalent anionic chelating ligand;
T is a covalent bridging group containing a Group IV A or V A element such as, but not limited to, a dialkyl, alkylaryl or diaryl silicon or germanium radical, alkyl or aryl phosphine or amine radical, or a hydrocarbyl radical such as methylene and ethylene.
L is a neutral Lewis base such as diethylether, tetraethylammonium chloride, tetrahydrofuran, dimethylaniline, aniline, trimethylphosphine, and n-butylamine, and "w" is a number from 0 to 3. L can also be a second transition metal compound of the same type such that the two metal centers M and H' are bridged by Q and Q', wherein M' has the same meaning as M and Q' has the same meaning as Q. Such dimeric compounds are represented by the formula:

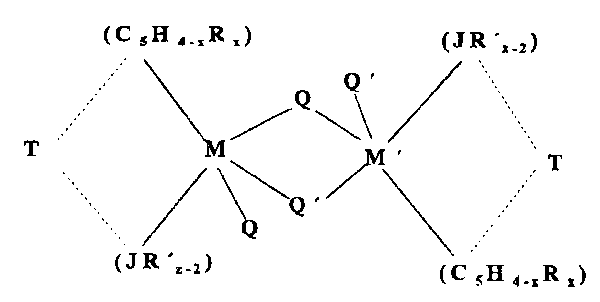

The alumoxane component of the catalyst may be represented by the formulas; (R³-Al-O)ₘ; R⁴(R⁵-Al-O)ₘAlR⁶₂ or mixtures thereof, wherein R³-R⁶ are, independently, a C₁-C₅ alkyl group or halide and "m" is an integer ranging from 1 to 50 and preferably is from 13 to 25.

Catalyst systems of the invention may be prepared by placing the "Group IV B transition metal component" and the alumoxane component in common solution in a normally liquid alkane or aromatic solvent, which solvent is preferably suitable for use as a polymerization diluent for the liquid phase polymerization of an α-olefin monomer.

Those species of the Group IV B transition metal component wherein the metal is titanium have been found to impart beneficial properties to a catalyst system which are unexpected in view of what is known about the properties of bis(cyclopentadienyl) titanium compounds which are cocatalyzed by alumoxanes. Whereas titanocenes in their soluble form are generally unstable in the presence of aluminum alkyls, the monocyclopentadienyl titanium metal components of this invention, particularly those wherein the heteroatom is nitrogen, generally exhibit greater stability in the presence of aluminum alkyls and higher catalyst activity rates.

Further, the titanium species of the Group IV B transition metal component catalyst of this invention generally exhibit higher catalyst activities and the production of poly-α-olefins of greater molecular weight than catalyst systems prepared with the zirconium or hafnium species of the Group IV B transition metal component.

A typical polymerization process of the invention such as for the polymerization or copolymerization of propylene or ethylene comprises the steps of contacting propylene, ethylene or other C₄-C₂₀ α-olefins alone, or with other unsaturated monomers including C₃-C₂₀ α-olefins, C₄-C₂₀ diolefins, and/or acetylenically unsaturated monomers either alone or in combination with other olefins and/or other unsaturated monomers, with a catalyst comprising, in a suitable polymerization diluent, a Group IV B transition metal component illustrated above; and a methylalumoxane in an amount to provide a molar aluminum to transition metal ratio of from 1:1 to 20,000:1 or more; and reacting such monomer in the presence of such catalyst system at a temperature of from -100°C to 300°C for a time of from 1 second to 10 hours to produce a poly-α-olefin having a weight average molecular weight of less than 2,000,000 and a molecular weight distribution of from 1.5 to 15.0.

As discussed further hereafter, by proper selection of the type and pattern R substituents for the cyclopentadienyl ligand in relationship to the type of R' substituent of the heteroatom ligand, the transition metal component for the catalyst system may be tailored to function in the catalyst system to produce low crystallinity poly-α-olefins or tactic amorphous poly-α-olefins.

### DETAILED DESCRIPTION

### Catalyst Component

The Group IV B transition metal component of the catalyst system is represented by the general formula: 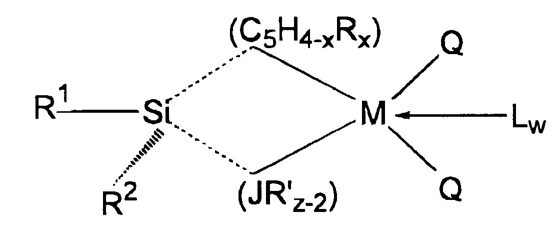 wherein M is Ti in its highest formal oxidation state (+4, d⁰ complex);
(C₅H₄₋ₓRₓ) is a cyclopentadienyl ring which is symmetrically substituted with two or four substituent groups R, "x" is 2, or 4 denoting the degree of substitution, and each substituent group R is, independently, a radical selected from a group consisting of C₁-C₂₀ hydrocarbyl radicals, substituted C₁-C₂₀ hydrocarbyl radicals wherein one or more hydrogen atoms is replaced by a halogen radical, an amido radical, a phosphido radical, and alkoxy radical or any other radical containing a Lewis acidic or basic functionality, C₁-C₂₀ hydrocarbyl-substituted metalloid radicals wherein the metalloid is selected from the Group IV A of the Periodic Table of Elements; and halogen radicals, amido radicals, phosphido radicals, alkoxy radicals, alkylborido radicals or any other radical containing Lewis acidic or basic functionality; or (C₅H₄₋ₓRₓ) is a cyclopentadienyl ring in which two adjacent R-groups are joined forming C₄-C₂₀ ring to give a saturated or unsaturated polycyclic cyclopentadienyl ligand. Symmetrically substituted is defined to mean that the cyclopentadienyl ring is substituted with R groups that are of approximately of the same steric bulk. Typically the size of these R groups are within 2 carbons of each other. However, if two adjacent R groups are linked to form a ring, then the bridge (T) may function as the other "part" of the symmetrical "pair." Likewise, the cyclopentadienyl ring may be substituted at all four sites with R groups and be considered symmetric as long as each of the symmetrical pairs were of similar steric bulk. Thus a cyclopentadienyl substituted at the 2 and the 5 positions with methyl and ethyl respectively, and substituted at the 3 and the 4 positions with hexyl and octyl, respectively, would be considered symmetric.

(JR'_{z-2}) is a heteroatom ligand in which J is an element with a coordination number of three from Group V A or an element with a coordination number of two from Group vI A of the Periodic Table of Elements, preferably nitrogen, phosphorus, oxygen or sulfur with nitrogen being preferred, and each R' is, independently a radical selected from a group consisting of C₁-C₂₀ hydrocarbyl radicals, substituted C₁-C₂₀ hydrocarbyl radicals wherein one or more hydrogen atoms is replaced by a halogen radical, an amido radical, a phosphido radical, an alkoxy radical or any other radical containing a Lewis acidic or basic functionality, and "z" is the coordination number of the element J;
each Q is, independently, any univalent anionic ligand such as a halide, hydride, or substituted or unsubstituted C₁-C₂₀ hydrocarbyl, alkoxide, aryloxide, amide, arylamide, phosphide or arylphosphide, provided that where any Q is a hydrocarbyl such Q is different from (C₅H₄₋ₓRₓ), or both Q together may be an alkylidene or a cyclometallated hydrocarbyl or any other divalent anionic chelating ligand;
T is a covalent bridging group containing a Group IV A or V A element such as, but not limited to, a dialkyl, alkylaryl or diaryl silicon or germanium radical, alkyl or aryl phosphine or amine radical, or a hydrocarbyl radical such as methylene and ethylene;
and L is a neutral Lewis base such as diethylether, tetrahydrofuran, dimethylaniline, aniline, trimethylphosphine, and n-butylamine and "w" is a number from 0 to 3; L can also be a second transition metal compound of the same type such that the two metal centers M and M' are bridged by Q and Q', wherein M' has the same meaning as M and Q' has the same meaning as Q. Such compounds are represented by the formula:

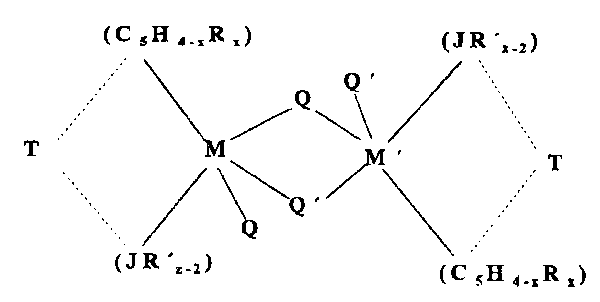

Examples of the T group which are suitable as a constituent group of the Group IV B transition metal component of the catalyst system are identified in column 1 of Table 1 under the heading "T".

Suitable, but not limiting, Group IV B transition metal compounds which may be utilized in the catalyst system of this invention include those wherein the T group bridge is a dialkyl, diaryl or alkylaryl silane, or methylene or ethylene. Exemplary of the more preferred species of bridged Group IV B transition metal compounds are dimethylsilyl, methylphenylsilyl, diethylsilyl, ethylphenylsilyl, diphenylsilyl, ethylene or methylene bridged compounds. Most preferred of the bridged species are dimethylsilyl, diethylsilyl and methylphenylsilyl bridged compounds.

Exemplary hydrocarbyl radicals for Q are methyl, ethyl, propyl, butyl, amyl, isoamyl, hexyl, isobutyl, heptyl, octyl, nonyl, decyl, cetyl, 2-ethylhexyl and phenyl with methyl being preferred. Exemplary halogen atoms for Q include chlorine, bromine, fluorine and iodine, with chlorine being preferred. Exemplary alkoxides and aryloxides for Q are methoxide, phenoxide and substituted phenoxides such as 4-methylphenoxide. Exemplary amides of Q are dimethylamide, diethylamide, methylethylamide, di-t-butylamide and diisoproylamide. Exemplary aryl amides are diphenylamide and any other substituted phenyl amides. Exemplary phosphides of Q are diphenylphosphide, dicyclohexylphosphide, diethylphosphide and dimethylphosphide Exemplary alkylidene radicals for both Q together are methylidene, ethylidene and propylidene. Examples of the Q group which are suitable as a constituent group or element of the Group IV B transition metal component of the catalyst system are identified in column 4 of Table 1 under the heading "Q".

Suitable hydrocarbyl and substituted hydrocarbyl radicals, which may be substituted as an R group for at least one hydrogen atom in the cyclopentadienyl ring, will contain from 1 to 20 carbon atoms and include straight and branched alkyl radicals, cyclic hydrocarbon radicals, alkylsubstituted cyclic hydrocarbon radicals, aromatic radicals and alkyl-substituted aromatic radicals, amido-substituted hydrocarbon radicals, phosphidosubstituted hydrocarbon radicals, alkoxy-substituted hydrocarbon radicals, and cyclopentadienyl rings containing one or more fused saturated or unsaturated rings. Suitable organometallic radicals, which may be substituted as an R group for at least one hydrogen atom in the cyclopentadienyl ring, include trimethylsilyl, triethylsilyl, ethyldimethylsilyl, methyldiethylsilyl, triphenylgermyl and trimethylgermyl. Other suitable radicals that may be substituted for one or more hydrogen atom in the cyclopentadienyl ring include halogen radicals, amido radicals, phosphido radicals, alkoxy radicals and alkylborido radicals. Examples of cyclopentadienyl ring groups (C₅H₄₋ₓRₓ) which are suitable as a constituent group of the Group IV B transition metal component of the catalyst system are identified in Column 2 of Table 1 under the heading (C₅H₄₋ₓRₓ).

Suitable hydrocarbyl and substituted hydrocarbyl radicals, which may be substituted as an R' group for at least one hydrogen atom in the heteroatom J ligand group, will contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radical, halogen radicals, amido radicals, phosphido radicals and the like. Examples of heteroatom ligand groups (JR'_{z-2}) which are suitable as a constituent group of the Group IV B transition metal component of the catalyst system are identified in column 3 of Table 1 under the heading (JR'_{z-2}).

Table 1 depicts representative constituent moieties for the "Group IV B transition metal component", the list is for illustrative purposes only and should not be construed to be limiting in any way. A number of final components may be formed by permuting all possible combinations of the constituent moieties with each other.

As noted, titanium species of the Group IV B transition metal compound have generally been found to yield catalyst systems which in comparison to their zirconium or hafnium analogous, are of higher activity. Illustrative, but not limiting of the titanium species which may exhibit such superior properties are;
dimethylsilyl (tetramethylcyclopentadienyl) (t-butylamido) titanium dichloride, dimethylsilyl(3,4-di-t-butylcyclopentadienyl) (cyclododecylamido) titanium dichloride, dimethylsilyl(2,5-dimethylcyclopentadienyl) cyclododecylamido titanium dichloride.

For illustrative purposes, the above compounds and those permuted from Table 1 include the neutral Lewis base ligand (L). The conditions under which complexes containing neutral Lewis base ligands such as ether or those which form dimeric compounds are determined by the steric bulk of the ligands about the metal center.

To illustrate members of the Group IV B transition metal component, select any combination of the species in Table 1. An example of a bridged species would be dimethylsilylcyclopentadienyl (t-butylamido)dichloro zirconium.

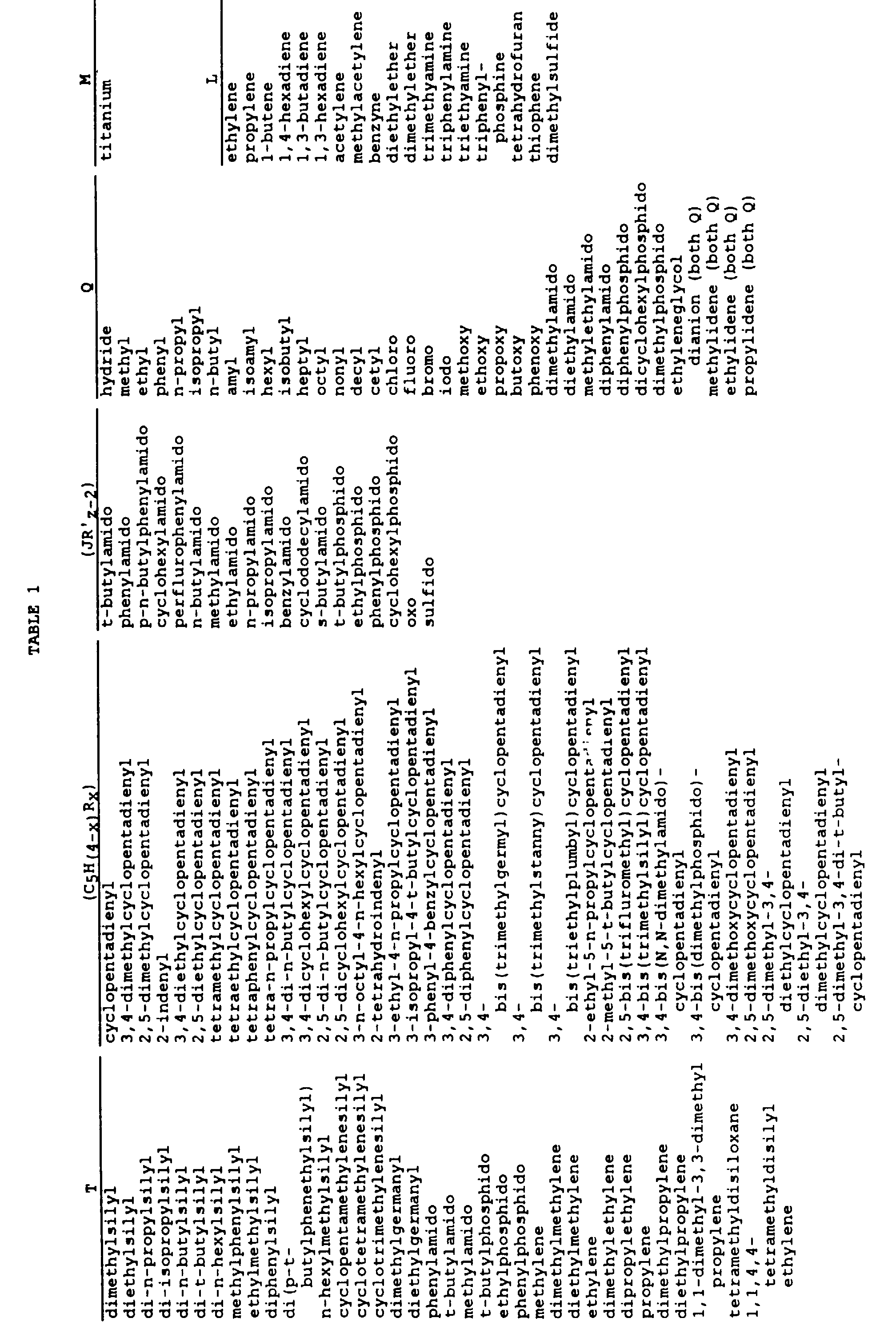

The Group IV B transition metal compounds can be prepared by reacting a cyclopentadienyl lithium compound with a dihalo compound, whereupon a lithium halide salt is liberated and a monohalo substituent is covalently bound to the cyclopentadienyl compound. The so substituted cyclopentadienyl reaction product is next reacted with a lithium salt of a phosphide, oxide, sulfide or amide (for the sake of illustrative purposes, a lithium amide) whereupon the halo element of the monohalo substituent group of the reaction product reacts to liberate a lithium halide salt and the amine moiety of the lithium amide salt is covalently bound to the substituent of the cyclopentadienyl reaction product. The resulting amine derivative of the cyclopentadienyl product is then reacted with an alkyl lithium reagent whereupon the labile hydrogen atoms, at the carbon atom of the cyclopentadienyl compound and at the nitrogen atom of the amine moiety covalently bound to the substituent group, react with the alkyl of the lithium alkyl reagent to liberate the alkane and produce a dilithium salt of the cyclopentadienyl compound. Thereafter the bridged species of the Group IV B transition metal compound is produced by reacting the dilithium salt cyclopentadienyl compound with a Group IV B transition metal preferably a Group IV B transition metal halide.

The class of transition metal components preferred for use in the process for production of poly-α-olefins is that wherein the covalent bridging group T contains silicon and the heteroatom J of the heteroatom ligand is nitrogen. Accordingly, a preferred class of transition metal components are of the formula: 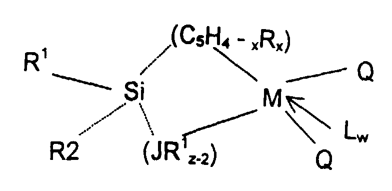 wherein Q, L, R', R, "x" and "w" are as previously defined and R¹ and are each independently a C₁ to C₂₀ hydrocarbyl radicals, substituted C₁ to C₂₀ hydrocarbyl radicals wherein one or more hydrogen atom is replaced by a halogen atom; R¹ and R² may also be joined forming a C₃ to C₂₀ ring which incorporates the silicon bridge.

### THE ALUMOXANE COMPONENT

The alumoxane component of the catalyst system is an oligomeric compound which may be represented by the general formula (R³-Al-O)ₘ which is a cyclic compound, or may be R⁴(R⁵-Al-O)ₘ-AlR⁶₂ which is a linear compound. An alumoxane is generally a mixture of both the linear and cyclic compounds. In the general alumoxane formula R³, R⁴, R⁵ and R⁶ are, independently a C₁-C₅ alkyl radical, for example, methyl, ethyl, propyl, butyl or pentyl and "m" is an integer from 1 to 50. Most preferably, R³, R⁴, R⁵ and R⁶ are each methyl and "m" is at least 4. When an alkyl aluminum halide is employed in the preparation of the alumoxane, one or more R³⁻⁶ groups may be halide.

As is now well known, alumoxanes can be prepared by various procedures. For example, a trialkyl aluminum may be reacted with water, in the form of a moist inert organic solvent; or the trialkyl aluminum may be contacted with a hydrated salt, such as hydrated copper sulfate suspended in an inert organic solvent, to yield an alumoxane. Generally, however prepared, the reaction of a trialkyl aluminum with a limited amount of water yields a mixture of both linear and cyclic species of alumoxane.

Suitable alumoxanes which may be utilized in the catalyst systems of this invention are those prepared by the hydrolysis of a trialkylaluminum; such as trimethylaluminum, triethyaluminum, tripropylaluminum; triisobutylaluminum, dimethylaluminumchloride, diisobutylaluminumchloride and diethylaluminumchloride, The most preferred alumoxane for use is methylalumoxane (MAO). Methylalumoxanes having an average degree of oligomerization of from 4 to 25 ("m" = 4 to 25), with a range of 13 to 25, are the most preferred.

### Catalyst Systems

The catalyst systems employed in the method of the invention comprise a complex formed upon admixture of the Group Iv B transition metal component with an alumoxane component. The catalyst system may be prepared by addition of the requisite Group IV B transition metal and alumoxane components to an inert solvent in which olefin polymerization can be carried out by a solution, slurry, gas phase or bulk phase polymerization procedure.

The catalyst system may be conveniently prepared by placing the selected Group IV B transition metal component and the selected alumoxane component, in any order of addition, in an alkane or aromatic hydrocarbon solvent -- preferably one which is also suitable for service as a polymerization diluent. When the hydrocarbon solvent utilized is also suitable for use as a polymerization diluent, the catalyst system may be prepared in situ in the polymerization reactor. Alternatively, the catalyst system may be separately prepared, in concentrated form, and added to the polymerization diluent in a reactor. If desired, the components of the catalyst system may be prepared as separate solutions and added to the polymerization diluent in a reactor, in appropriate ratios, as is suitable for a continuous liquid phase polymerization reaction procedure. Alkane and aromatic hydrocarbons suitable as solvents for formation of the catalyst system and also as a polymerization diluent are exemplified by, but are not necessarily limited to, straight and branched chain hydrocarbons such as isobutane, butane, pentane, hexane, heptane and octane cyclic and alicyclic hydrocarbons such as cyclohexane, cycloheptane, methylcyclohexane, and methylcycloheptane, and aromatic and alkyl-substituted aromatic compounds such as benzene, toluene and xylene. Suitable solvents also include liquid olefins which may act as monomers or comonomers including ethylene, propylene, 1-butene and 1-hexene.

In accordance with this invention optimum results are generally obtained wherein the Group IV B transition metal compound is present in the polymerization diluent in a concentration of from 0.0001 to 1.0 millimoles/liter of diluent and the alumoxane component is present in an amount to provide a molar aluminum to transition metal ratio of from 1:1 to 20,000:1. Sufficient solvent should be employed so as to provide adequate heat transfer away from the catalyst components during reaction and to permit good mixing.

The catalyst system ingredients -- that is, the Group IV B transition metal, the alumoxane, and polymerization diluent -- can be added to the reaction vessel rapidly or slowly. The temperature maintained during the contact of the catalyst components can vary widely, such as, for example, from -100° to 300°C. Greater or lesser temperatures can also be employed. Preferably, during formation of the catalyst system, the reaction is maintained within a temperature of from 25° to 100°C, most preferably about 25°C.

At all times, the individual catalyst system components, as well as the catalyst system once formed, are protected from oxygen and moisture. Therefore, the reactions to prepare the catalyst system are performed in an oxygen and moisture free atmosphere and, where the catalyst system is recovered separately it is recovered in an oxygen and moisture free atmosphere. Preferably, therefore, the reactions are performed in the presence of an inert dry gas such as, for example, helium or nitrogen.

### Polymerization Process

In a preferred embodiment of the process of this invention the catalyst system is utilized in the liquid phase (slurry, solution, suspension or bulk phase or combination thereof), high pressure fluid phase or gas phase polymerization of an α-olefin monomer. These processes may be employed singularly or in series. The liquid phase process comprises the steps of contacting an α-olefin monomer with the catalyst system in a suitable polymerization diluent and reacting said monomer in the presence of said catalyst system for a time and at a temperature sufficient to produce an amorphous poly-α-olefin as desired.

The monomer for such process comprises an α-olefin having 3 to 20 carbon atoms. Propylene is a preferred monomer. Homopolymers of higher α-olefin such as ethylene, butene, styrene and copolymers thereof with ethylene and/or C₄ or higher α-olefins, diolefins, cyclic olefins and internal olefins can also be prepared. Conditions most preferred for the homo- or copolymerization of the α-olefin are those wherein an α-olefin is submitted to the reaction zone at pressures of from about 0.019 psia to 50,000 psia (1.3 × 10⁻³ bar to 3445 bar) and the reaction temperature is maintained at from -100° to 300°C. The aluminum to transition metal molar ratio is preferably from 1:1 to 20,000 to 1. A more preferable range would be 1:1 to 2000:1. The reaction time is preferably from 10 seconds to 10 hours. Without limiting in any way the scope of the invention, one means for carrying out the process of the present invention for production of a copolymer is as follows: in a stirred-tank reactor liquid α-olefin monomer is introduced, such as propylene. The catalyst system is introduced via nozzles in either the vapor or liquid phase. The reactor contains a liquid phase composed substantially of the liquid α-olefin monomer together with a vapor phase containing vapors of the monomer. The reactor temperature and pressure may be controlled via reflux of vaporizing α-olefin monomer (autorefrigeration), as well as by cooling coils, jackets etc. The polymerization rate is controlled by the concentration of catalyst.

By appropriate selection of (1) Group IV B transition metal component for use in the catalyst system; (2) the type and amount of alumoxane used; (3) the polymerization diluent type and volume; (4) reaction temperature; and (5) reaction pressure, one may tailor the product polymer to the weight average molecular weight value desired while still maintaining the molecular weight distribution to a value below 6.0, preferably below 4.0. Optionally, higher molecular weight distributions can be tailored.

The preferred polymerization diluents for practice of the process of the invention are aromatic diluents, such as toluene, or alkanes, such as hexane. optionally, the alpha- olefin itself may be used as the solvent.

The resins that are prepared in accordance with this invention can be used to make a variety of products including films and fibers, adhesives and compatibilizers.

### EXAMPLES

In the examples which illustrate the practice of the invention the analytical techniques described below were employed for the analysis of the resulting polyolefin products. Molecular weight determinations for polyolefin products were made by Gel Permeation Chromatography (GPC) according to the following technique. Molecular weights and molecular weight distributions were measured using a Waters 150 gel permeation chromatograph equipped with a differential refractive index (DRI) detector and a Chromatix KMX-6 on-line light scattering photometer. The system was used at 135°C with 1,2,4-trichlorobenzene as the mobile phase. Shodex (Showa Denko America, Inc.) polystyrene gel columns 802, 803, 804 and 805 were used. This technique is discussed in "Liquid Chromatography of Polymers and Related Materials III", J. Cazes editor, Marcel Dekker. 1981, p. 207, which is incorporated herein by reference. No corrections for column spreading were employed; however, data on generally accepted standards, e.g. National Bureau of Standards Polyethylene 1484 and anionically produced hydrogenated polyisoprenes (an alternating ethylenepropylene copolymer) demonstrated that such corrections on Mw/Mn (= MWD) were less than 0.05 units. Mw/Mn was calculated from elution times. The numerical analyses were performed using the commercially available Beckman/CIS customized LALLS software in conjunction with the standard Gel Permeation package, run on a HP 1000 computer. Ca lculations involved in the characterization of polymers by ¹³CNMR follow the work of F. A. Bovey in "Polymer Conformation and Configuration" Academic Press, New York, 1969.

The following examples are intended to illustrate specific embodiments of the invention and are not intended to limit the scope of the invention.

### EXAMPLES PRODUCING AMORPHOUS POLY-α-OLEFIN

All procedures were performed under an inert atmosphere of helium or nitrogen. Solvent choices were often optional, for example, in most cases either pentane or 30-60 petroleum ether could be interchanged. The choice between tetrahydrofuran (thf) and diethyl ether (ether) is a bit more restricted, but in several reactions, either could be used. The lithiated amides were prepared from the corresponding amines and either n-BuLi or MeLi. Published methods for preparing LiHC₅Me₄ include C. M. Fendrick et al., Organometallics 1984, 3, 819 and F. H. Kohler and K. H. Doll, Z. Naturforsch 1982, 376, 144. other lithiated substituted cyclopentadienyl compounds are typically prepared from the corresponding cyclopentadienyl ligand and n-BuLi or MeLi, or by reaction of MeLi with the proper fulvene. TiCl₄ was typically used in its etherate form. The etherate can be prepared by simply adding TiCl₄ to ether and filtering off the solid product which is then vacuum dried. TiCl₄, ZrCl₄, HfCl₄, amines, silanes, substituted and unsubstituted cyclopentadienyl compounds or precursors, and lithium reagents were purchases from Aldrich Chemical Company, Petrarch Systems or Cerac. Methylalumoxane was supplied by either Schering or Ethyl corporation.

### EXAMPLE A

Compound A: Part 1. (10.0 g, 0.078 mol) was slowly added to a Me₂SiCl₂ (11.5 ml, 0.095 mol, in 225 ml of tetrahydrofuran solution). The solution was stirred for 1 hour to insure a complete reaction. The solvent was then removed in vacuo. Pentane was added to precipitate the LiCl which was filtered off. The solvent was then removed from the filtrate leaving behind the pale yellow liquid, (C₅Me₄H)SiMe₂Cl (15.34 g, 0.071 mol).

Part 2. (C₅Me₄H)SiMe₂Cl (10.0 g, 0.047 mol) was slowly added to a suspension of LiHN-t-Bu (3.68 g, 0.047 mol, approximately 100 ml of thf). The mixture was stirred overnight. The thf was then removed in vacuo. Petroleum ether (approximately 100 ml) was added to precipitate the LiCl which was filtered off. The solvent was removed from the filtrate leaving behind the pale yellow liquid, Me₂Si(C₅Me₄H)(HN-t-Bu) (11.4 g, 0.044 mol).

Part 3. Me₂Si(C₅Me₄H)(HN-t-Bu) (11.14 g, 0.044 mol) was diluted with approximately 100 ml of ether. MeLi (1.4 M, 64 ml, 0.090 mol) was slowly added. The mixture was allowed to stir for 1/2 hour after the final addition of MeLi. The ether was reduced in volume prior to filtering off the product. The product, Li₂[Me₂Si(C₅Me₄) (N-t-Bu)], was washed with several small portions of ether, then vacuum dried.

Part 4. Li₂[Me₂Si(C₅Me₄) (N-t-Bu)] (3.0 g, 0.011 mol) was suspended in approximately 150 ml of ether. ZrCl₄ (2.65 g, 0.011 mol) was slowly added and the resulting mixture was allowed to stir overnight. The ether was removed in vacuo. Pentane was added to precipitate the LiCl which was filtered off. The pentane was significantly reduced in volume and the pale yellow solid was filtered off and washed with solvent. Me₂Si(C₅Me₄) (N-*t*-Bu)ZrCl₂ (1.07 g, 0.0026 mole) was recovered. Additional Me₂Si(C₅Me₄)(N-*t*-Bu)ZrCl₂ was recovered from the filtrate by repeating the recrystallization procedure. Total yield: 1.94 g, 0.0047 mol.

### Example B

Compound B: Part 1. (C₅Me₄H)SiMe₂Cl was prepared as described in Example A for the preparation of compound A, Part 1.

Part 2. (C₅Me₄H)SiMe₂Cl (8.0 g, 0.037 mol) was slowly added to a suspension of LiHNc₁₂H₂₃(C₁₂H₂₃ = cyclododecyl, 7.0 g, 0.037 mol, approximately 80 ml thf). The mixture was stirred overnight. The thf was then removed via a vacuum to a cold trap held at -196°C. Petroleum ether and toluene were added to precipitate the Licl. The mixture was filtered through Celite. The solvent was removed from the filtrate. Me₂Si(C₅Me₄H) (NHC₁₂H₂₃) (11.8 g, 0.033 mol) was isolated as a pale yellow liquid.

Part 3. Me₂Si(C₅Me₄H)(NHC₁₂H₂₃) (11.9 g, 0.033 mol) was diluted with approximately 150 ml of ether. MeLi (1.4 M, 47 ml, 0.066 mol) was slowly added. The mixture was allowed to stir for 2 hours after the final addition of MeLi. The ether was reduced in volume prior to filtering off the product. the product, [Me₂Si(C₅Me₄H)(NC₁₂H₂₃)]Li₂ (3.0 g, 0.008 mol) was washed with several small portions of ether, then vacuum dried to yield 11.1 g (0.030 mol) of product.

Part 4. [Me₂Si(C₅Me₄H)(NC₁₂H₂₃)]Li₂ (3.0 g, 0.008 mol) was suspended in cold ether. TiCl₄.2Et₂O (2.7 g, 0.008 mol) was slowly added and the resulting mixture was allowed to stir overnight. The ether was removed via a vacuum to a cold trap held at -196°C. Methylene chloride was added to precipitate the LiCl. The mixture was filtered through Celite. The solvent was significantly reduced in volume and petroleum ether was added to precipitate out the product. This mixture was refrigerated prior to filtration in order to maximize precipitation. The solid collected was recrystallized from methylene chloride and Me₂Si(C₅Me₄)(NC₁₂H₂₃)TiCl₂ was isolated (1.0 g, 2.1 mmol).

### Polymerization Example - I

Using the same reactor design and general procedure already described, 100 ml of toluene, 400 ml of propylene, 7 ml 1.0 M MAO, and 6.9 mg of preactivated compound A (6 ml of a 11.5 mg of compound A plus 0.5 ml of 1 M MAO in 9.5 ml of toluene) were added into the reactor. The reactor was then heated to 50°C. The polymerization reaction was limited to 30 minutes. The reaction was ceased by rapidly cooling and venting the system. The solvent was evaporated *off* of the polymer by a stream of nitrogen. Atactic polypropylene was recovered (2.9 g, MW = 5100, MWD 1.86, r = 0.452, rrrr = .049, m = 0.548, mmmm = 0.086).

### Polymerization Example II

Using the same reactor design and general procedure already described, 500 ml of propylene, 1 ml of 1.0 M MAO, and 1 mg of compound B in 1.0 ml of 1.0 M MAO were added to the reactor. The reactor was heated at 60°C and the reaction was allowed to run for 2 hours, followed by rapidly cooling and venting the system. After evaporation of the excess propylene, 113 g of polypropylene was recovered (MW 723,700, MWD = 1.849, r = 0.586, rrrr = 0.074, m = 0.432, mmmm = 0.034). The polymer exhibited a slight melting point at 129°C.

### Polymerization Example III

Using the same reactor design and general procedure already described, 400 ml of propylene, 2 ml of 1.0 M MAO, and 1 mg of compound B in 1.0 ml of 1.0 M MAO were added to the reactor. The reactor was heated at 40°c and the reaction was allowed to run for 1 hour, followed by rapidly cooling and venting the system. After evaporation of the excess propylene, 126 g of polypropylene was recovered (MW = 1,255,000, MWD = 1.90, r = 0.56, rrr = -.07, m = 0.44, mmmm = 0.04).

The characterization Data for Examples I-III are presented in Table 2. The data show that these products are amorphous.

With respect to the whole of the present invention, by appropriate selection of (1) Group IVB transition metal component for use in the catalyst system; (2) the type and amount of alumoxane used; (3) the polymerization diluent type and volume; and (4) reaction temperature, one may tailor the product polymer to the weight average molecular weight value desired and to the tacticity desired while still maintaining the molecular weight distribution at a value below about 6.0, preferably below 4.0.

The resins that are prepared in accordance with this invention can be used to make a variety of products including films, fibers, adhesives, compatibilizers and molded articles.

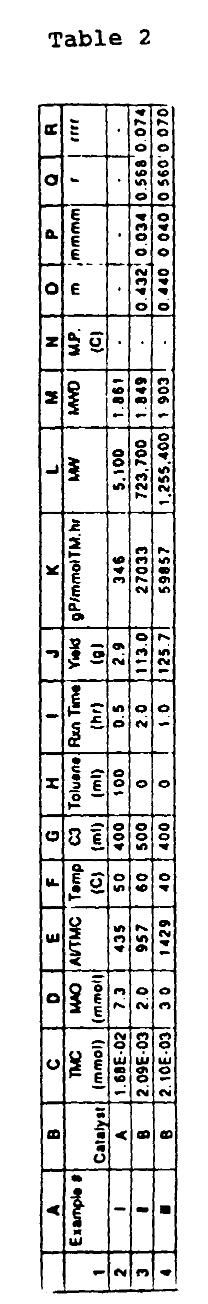

## Claims

1. A process for producing amorphous polypropylene comprising the steps of:
(I) contacting propylene under polymerization conditions with a catalyst system comprising:
(A) an alumoxane activator, and
(B) a transition metal component represented by the formulae: 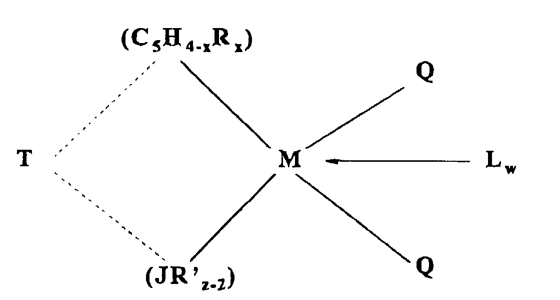 or 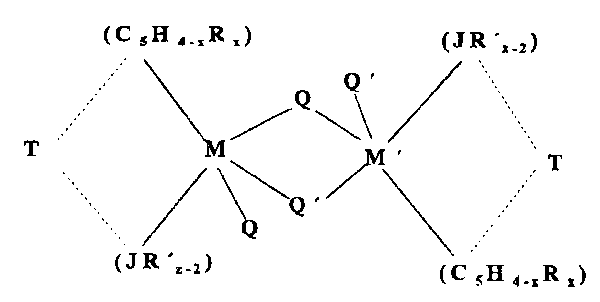 wherein M is Ti in its highest formal oxidation state;
(C₅H₄₋ₓ Rₓ) is a cyclopentadienyl ring which is symmetrically substituted with two or four substituent groups R, with "x" denoting the degree of substitution (x = 2 or 4) and each R is,
independently, a radical selected from a group consisting of C₁-C₂₀ hydrocarbyl radicals, substituted C₁-C₂₀ hydrocarbyl radicals wherein one or more hydrogen atoms is replaced by a halogen radical, an amido radical, a phosphido radical, an alkoxy radical or any other radical containing a Lewis acidic or basic functionality, C₁-C₂₀ hydrocarbyl-substituted metalloid radicals wherein the metalloid is selected from the Group IV A of the Periodic Table of Elements, and halogen radicals, amido radicals, phosphido radicals, alkoxy radicals alkylbarido radicals or a radical containing Lewis acidic or basic functionality, or at least two adjacent R-groups are joined forming C₄-C₂₀ ring to give a saturated or unsaturated polycyclic cyclopentadienyl ligand.
(JR'_{z-2}) is a heteroatom ligand in which J is an element with a coordination number of three from Group V A or an element with a coordination number of two from Group VI A of the Periodic Table of Elements, and each R' is, independently a radical selected from a group consisting of C₁-C₂₀ hydrocarbyl radicals, substituted C₁-C₂₀ hydrocarbyl radicals where one or more hydrogen atom is replaced by a halogen radical, an amido radical, a phosphido radical, and alkoxy radical or any other radical containing a Lewis acidic or basic functionality, and "z" is the coordination number of the element J,
each Q is, independently, a halide, hydride, or a substituted or unsubstituted C₁-C₂₀ hydrocarbyl, alkoxide, aryloxide, amide, arylamide, phosphide or arylphosphide, or both Q together are an alkylidene,
or a cyclometallated hydrocarbyl or any divalent anionic chelating ligand;
T is a covalent bridging group containing a Group IV A or V A element;
M' has the same meaning as M, and Q' has the same meaning as Q.
L is a neutral Lewis base where "w" denotes a number from 0 to 3;
(ii) recovering an amorphous polypropylene having a weight average molecular weight in excess of 100,000.

2. The process of claim 1 wherein the Group IV-B transition metal component is one of the formula: 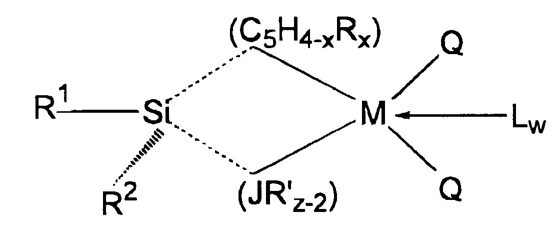 wherein R¹ and R² are, independently, a C₁ to C₂₀ hydrocarbyl radical, substituted C₁ to C₂₀ hydrocarbyl radical wherein one or more hydrogen atom is replaced by a halogen atom; R¹ and R² may also be joined forming a C₃ to C₂₀ ring.

3. The processes of claims 1 or 2 wherein J is nitrogen.

4. The process of claims 1 or 2 wherein R is a C₁ to C₂₀ hydrocarbyl radical and R' is a C₆ to C₂₀ cyclohydrocarbyl radical or an aromatic radical.

5. The process of claim 1 wherein R' is an alkyl radical or cyclic radical.

6. The process of claims 1 or 2 wherein M is titanium.

7. A completely atactic amorphous polypropylene having a weight average molecular weight greater than 200,000.

8. A substantially atactic amorphous polypropylene having a weight average molecular weight greater than 500,000.

9. Amorphous polypropylene having a weight average molecular weight greater than 200,000, produced by a process comprising the steps of:
(i) contacting one or more α-olefin (s) under polymerization conditions with a catalyst system comprising;
(a) an alumoxane activator, and
(b) a transition metal component represented by the formulae: 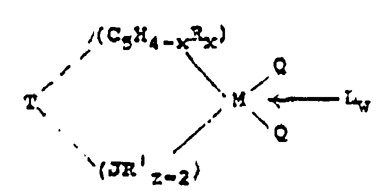 or 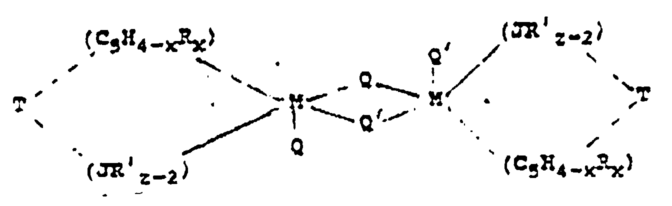 wherein M is Ti in its highest formal oxidation state; M' has the same meaning as M;
(C₅H₄₋ₓRₓ) is a cyclopentadienyl ring which is symmetrically substituted with two or four substituent groups R, with "x" denoting the degree of substitution (x = 2 or 4) and each R is, independently, a radical selected from a group consisting of C₁-C₂₀ hydrocarbyl radicals substituted C₁-C₂₀ hydrocarbyl radicals wherein one or more hydrogen atoms is replaced by a halogen radical, an amido radical, a phosphido radical, and
alkoxy radical or any other radical containing a Lewis acidic or basic functionality, C₁-C₂₀ hydrocarbyl-substituted metalloid radicals wherein the metalloid is selected from the Group IV A of the Periodic Table of Elements, and halogen radicals, amido radicals, phosphido radicals, alkoxy radicals, alkylborido radicals or a radical containing Lewis acidic or basic functionality, or at least two adjacent R-groups are joined forming C₄-C₂₀ ring to give a saturated or unsaturated polycyclic cyclopentadienyl ligand;
(JR'_{z-2}) is a heteroatom ligand in which J is an element with a coordination number of three from Group V A or an element with a coordination number of two from Group VI A of the Periodic Table of Elements, and Each R' is, independently a radical selected from a group consisting of C₁-C₂₀ hydrocarbyl radicals, substituted C₁-C₂₀ hydrocarbyl radicals where one or more hydrogen atom is replaced by a halogen radical, an amido radical, a phospido radical, and alkoxy radical or any other radical containing a Lewis acidic or basic functionality, and "z" is the coordination number of the element J;
each Q is, independently, a univalent anionic ligand which cannot be a substituted or unsubstituted cyclopentadienyl ring, wherein said univalent anionic ligand is selected from a halide, hydride, or a substituted or unsubstituted C₁-C₂₀ hydrocarbyl, alkoxide, aryloxide, amide, arylamide, phosphide or arylphosphide, or both Q together are an alkylidene, or a cyclometallated hydrocarbyl or
any divalent anionic chelating ligands Q' has the same meaning as Q;
T is a covalent bridging group containing a Group IV A or V A element;
L is a neutral Lewis base where "w" denotes a number from 0 to 3;
(ii) recovering an amorphous polypropylene.

10. The amorphous polypropylene of claim 9 wherein the transition metal component is a compound represented by this formula:

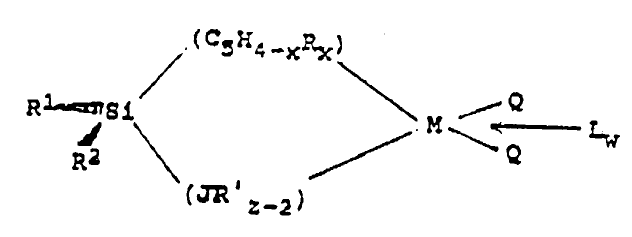

11. The polypropylene of claim 9 which is atactic.

12. The polypropylene of claim 11 which has a weight average molecular weight of greater than 500,000.

13. An article of manufacture comprising the polypropylene of claim 12.

14. The polypropylene of claim 10 which is atactic.

15. The polypropylene of claim 10 which has a weight average molecular weight of greater than 500,000.

16. An article of manufacture comprising the polypropylene of claim 10.

## Patentansprüche

1. Verfahren zur Herstellung von amorphem Polypropylen, bei dem
(I) unter Polymerisationsbedingungen Propylen mit einem Katalysatorsystem kontaktiert wird, das
(A) einen Alumoxanaktivator und
(B) eine Übergangsmetallkomponente mit den Formeln 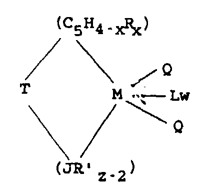 oder 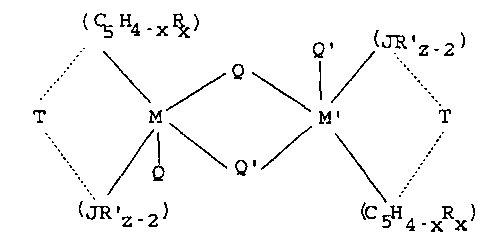 umfaßt, in der M Ti in seinem höchsten formalen Oxidationszustand ist;
(C₅H₄₋ₓRₓ) ein Cyclopentadienylring ist, der symmetrisch mit zwei oder vier Gruppen R substituiert ist, wobei "x" den Substitutionsgrad (x = 2 oder 4) bedeutet und jedes R jeweils unabhängig ein Rest ausgewählt aus einer Gruppe bestehend aus C₁- bis C₂₀-Kohlenwasserstoffresten, substituierten C₁- bis C₂₀-Kohlenwasserstoffresten, in denen ein Wasserstoffatom oder mehrere Wasserstoffatome durch einen Halogenrest, einen Amidorest, einen Phosphidorest, einen Alkoxyrest oder jeden anderen Rest, der eine Lewis-saure oder -basische Funktionalität enthält, ersetzt ist/sind, C₁- bis C₂₀-kohlenwasserstoffsubstituierten Metalloidresten, in denen das Metalloid ausgewählt ist aus der Gruppe IV A des Periodensystems der Elemente, und Halogenresten, Amidoresten, Phosphidoresten, Alkoxyresten, Alkylboridoresten oder einem Rest, der Lewis-saure oder -basische Funktionalität enthält, ist oder mindestens zwei benachbarte R-Gruppen unter Bildung eines C₄- bis C₂₀-Rings verbunden sind, um einen gesättigten oder ungesättigten polycyclischen Cyclopentadienylliganden zu ergeben;
(JR'_{z-2}) ein Heteroatomligand ist, in dem J ein Element mit einer Koordinationszahl von drei aus der Gruppe V A oder ein Element mit einer Koordinationszahl von zwei aus der Gruppe VI A des Periodensystems der Elemente ist, und jedes R' unabhängig ein Rest ausgewählt aus einer Gruppe bestehend aus C₁- bis C₂₀-Kohlenwasserstoffresten, substituierten C₁- bis C₂₀-Kohlenwasserstoffresten, in denen ein Wasserstoffatom oder mehrere Wasserstoffatome durch einen Halogenrest, einen Amidorest, einen Phosphidorest, einen Alkoxyrest oder jeden anderen Rest, der eine Lewis-saure oder -basische Funktionalität enthält, ersetzt worden ist/sind, und "z" die Koordinationszahl des Elementes J ist;
jedes Q unabhängig Halogen, Hydrid oder ein substituierter oder unsubstituierter C₁- bis C₂₀-Kohlenwasserstoff, Alkoxid, Aryloxid, Amid, Arylamid, Phosphid oder Arylphosphid ist, oder beide Q zusammen ein Alkyliden oder cyclometallierter Kohlenwasserstoff oder beliebiger zweiwertiger anionischer chelatbildender Ligand sind,
T eine kovalente Brückengruppe ist, die ein Gruppe IV A oder V A Element enthält,
M' die gleiche Bedeutung wie M und Q' die gleiche Bedeutung wie Q hat,
L eine neutrale Lewisbase ist, wobei "w" eine Zahl von 0 bis 3 bedeutet;
und
(II) ein amorphes Polypropylen mit einem durchschnittlichen Molekulargewicht (Gewichtsmittel) über 100 000 gewonnen wird.

2. Verfahren nach Anspruch 1, bei dem die Gruppe IV B Übergangsmetallverbindung die Formel 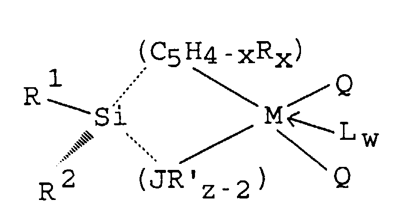 hat, wobei R¹ und R² unabhängig ein C₁- bis C₂₀-Kohlenwasserstoffrest, substituierter C₁- bis C₂₀-Kohlenwasserstoffrest, in denen ein Wasserstoffatom oder mehrere Wasserstoffatome durch ein Halogenatom ersetzt ist/sind, sind, wobei R¹ und R² auch unter Bildung eines C₃- bis C₂₀-Rings verbunden sein können.

3. Verfahren nach einem der Ansprüche 1 oder 2, bei dem J Stickstoff ist.

4. Verfahren nach einem der Ansprüche 1 oder 2, bei dem R ein C₁- bis C₂₀-Kohlenwasserstoffrest und R' ein cyclischer C₆-bis C₂₀-Kohlenwasserstoffrest oder ein aromatischer Rest ist.

5. Verfahren nach Anspruch 1, bei dem R' ein Alkylrest oder cyclischer Rest ist.

6. Verfahren nach Anspruch 1 oder 2, bei dem M Titan ist.

7. Vollständig ataktisches amorphes Polypropylen mit einem durchschnittlichen Molekulargewicht (Gewichtsmittel) von mehr als 200 000.

8. Im wesentlichen ataktisches amorphes Polypropylen mit einem durchschnittlichen Molekulargewicht (Gewichtsmittel) von mehr als 500 000.

9. Amorphes Polypropylen mit einem durchschnittlichen Molekulargewicht (Gewichtsmittel) von mehr als 200 000, das nach einem Verfahren hergestellt ist, bei dem
(I) unter Polymerisationsbedingungen ein oder mehrere α-Olefin(e) mit einem Katalysatorsystem kontaktiert wird bzw. werden, das
(A) einen Alumoxanaktivator und
(B) eine Übergangsmetallkomponente mit den Formeln 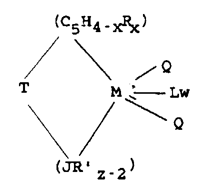 oder 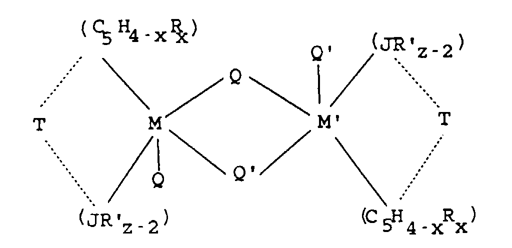 umfaßt, in der M Ti in seinem höchsten formalen Oxidationszustand ist; M' die gleiche Bedeutung wie M hat,
(C₅H₄₋ₓRₓ) ein Cyclopentadienylring ist, der symmetrisch mit zwei oder vier Gruppen R substituiert ist, wobei "x" den Substitutionsgrad (x = 2 oder 4) bedeutet und jedes R unabhängig ein Rest ausgewählt aus einer Gruppe bestehend aus C₁- bis C₂₀-Kohlenwasserstoffresten, substituierten C₁- bis C₂₀-Kohlenwasserstoffresten, in denen ein Wasserstoffatom oder mehrere Wasserstoffatome durch einen Halogenrest, einen Amidorest, einen Phosphidorest, einen Alkoxyrest oder jeden anderen Rest, der eine Lewis-saure oder -basische Funktionalität enthält, ersetzt ist/sind, C₁- bis C₂₀-kohlenwasserstoffsubstituierten Metalloidresten, in denen das Metalloid ausgewählt ist aus der Gruppe IV A des Periodensystems der Elemente, und Halogenresten, Amidoresten, Phosphidoresten, Alkoxyresten, Alkylboridoresten oder einem Rest, der Lewis-saure oder -basische Funktionalität enthält, ist oder mindestens zwei benachbarte R-Gruppen unter Bildung eines C₄- bis C₂₀-Rings verbunden sind, um einen gesättigten oder ungesättigten polycyclischen Cyclopentadienylliganden zu ergeben;
(JR'_{z-2}) ein Heteroatomligand ist, in dem J ein Element mit einer Koordinationszahl von drei aus der Gruppe V A oder ein Element mit einer Koordinationszahl von zwei aus der Gruppe VI A des Periodensystems der Elemente ist, und jedes R' unabhängig ein Rest ausgewählt aus einer Gruppe bestehend aus C₁- bis C₂₀-Kohlenwasserstoffresten, substituierten C₁- bis C₂₀-Kohlenwasserstoffresten, in denen ein Wasserstoffatom oder mehrere Wasserstoffatome durch einen Halogenrest, einen Amidorest, einen Phosphidorest, einen Alkoxyrest oder jeden anderen Rest, der eine Lewis-saure oder -basische Funktionalität enthält, ersetzt worden ist/sind, und "z" die Koordinationszahl des Elementes J ist;
jedes Q unabhängig ein einwertiger anionischer Ligand ist, der kein substituierter oder unsubstituierter Cyclopentadienylring sein kann, wobei der einwertige anionische Ligand ausgewählt ist aus Halogen, Hydrid oder einem substituierten oder unsubstituierten C₁- bis C₂₀-Kohlenwasserstoff, Alkoxid, Aryloxid, Amid, Arylamid, Phosphid oder Arylphosphid ist, oder beide Q zusammen ein Alkyliden oder cyclometallierter Kohlenwasserstoff oder beliebiger zweiwertiger anionischer chelatbildender Ligand sind, Q' die gleiche Bedeutung wie Q hat,
T eine kovalente Brückengruppe ist, die ein Gruppe IV A oder V A Element enthält,
L eine neutrale Lewisbase ist, wobei "w" eine Zahl von 0 bis 3 bedeutet; und
(II) ein amorphes Polypropylen gewonnen wird.

10. Amorphes Polypropylen nach Anspruch 9, wobei die Übergangsmetallkomponente eine Verbindung mit dieser Formel ist:

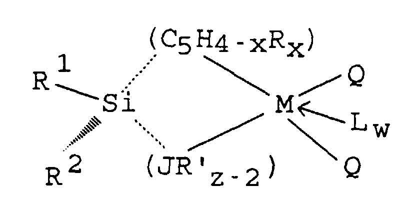

11. Polypropylen nach Anspruch 9, das ataktisch ist.

12. Polypropylen nach Anspruch 11, das ein durchschnittliches Molekulargewicht (Gewichtsmittel) von mehr als 500 000 hat.

13. Gefertigter Gegenstand, der das Polypropylen gemäß Anspruch 12 umfaßt.

14. Polypropylen nach Anspruch 10, das ataktisch ist.

15. Polypropylen nach Anspruch 10, das ein durchschnittliches Molekulargewicht (Gewichtsmittel) von mehr als 500 000 hat.

16. Gefertigter Gegenstand, der das Polypropylen gemäß Anspruch 10 umfaßt.

## Revendications

1. Procédé pour la production d'un polypropylène amorphe, comprenant les étapes consistant :
(I) à mettre en contact du propylène dans des conditions de polymérisation avec une formulation de catalyseur comprenant :
(A) un activateur consistant en un alumoxane, et
(B) un composé de métal de transition représenté par les formules : 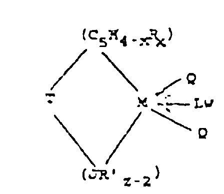 oder 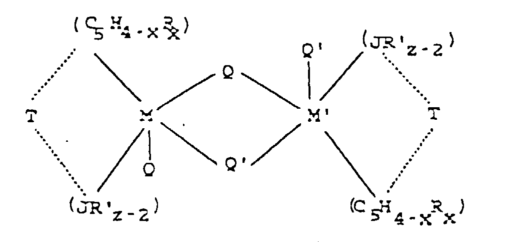 dans lesquelles M représente Ti à son état d'oxydation formelle le plus élevé :
(C₅H₄₋ₓRₓ) représente un noyau cyclopentadiényle qui est substitué de manière symétrique avec deux à quatre groupes R servant de substituants, "x" désignant le degré de substitution (x = 2 ou 4) et chaque groupe R représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un radical halogéno, un radical amido, un radical phosphido, un radical alkoxy ou n'importe quel autre radical contenant une fonctionnalité acide ou basique de Lewis, des radicaux métalloidiques à substituants hydrocarbyle en C₁ à C₂₀, dans lesquels le métalloïde est choisi dans le groupe IV A du Tableau Périodique des Eléments, et des radicaux halogéno, des radicaux amido, des radicaux phosphido, des radicaux alkoxy, des radicaux alkylborido ou un radical contenant une fonctionnalité acide ou basique de Lewis, ou bien au moins deux groupes R adjacents sont joints en formant un noyau en C₄ à C₂₀, ce qui donne un ligand cyclopentadiényle polycyclique saturé ou insaturé ;
(JR'_{z-2}) représente un ligand hétéroatomique dans lequel J représente un élément ayant un indice de coordination égal à trois du Groupe V A ou un élément ayant un indice de coordination égal à deux du Groupe VI A du Tableau Périodique des Eléments, chaque groupe R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un radical halogéno, un radical amido, un radical phosphido, un radical alkoxy ou n'importe quel autre radical contenant une fonctionnalité acide ou basique de Lewis, et "z" représente l'indice de coordination de l'élément J ;
chaque radical Q représente, indépendamment, un radical halogénure, hydrure ou un radical hydrocarbyle en C₁ à C₂₀ substitué ou non substitué, alcoolate, aryloxyde, amide, arylamide, phosphure ou arylphosphure, ou bien deux radicaux Q, conjointement, représentent un radical alkylidène, ou un radical hydrocarbyle cyclométallé ou n'importe quel ligand chélatant anionique divalent ;
T représente un groupe de pontage covalent contenant un élément du Groupe IV A ou V A.
M' a la même définition que M, et Q' a la même définition que Q ;
L représente une base de Lewis neutre, "w" désignant un nombre de 0 à 3 ;
(II) à recueillir un polypropylène amorphe ayant une moyenne pondérale du poids moléculaire supérieure à 100 000.

2. Procédé suivant la revendication 1, dans lequel le composé de métal de transition du Groupe IV-B est un composé de formule : 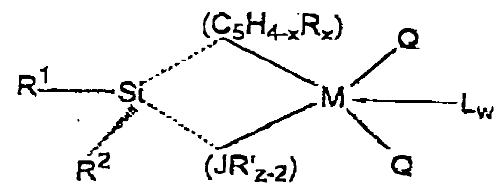 dans laquelle R¹ et R² représentent, indépendamment, un radical hydrocarbyle en C₁ a C₂₀, un radical hydrocarbyle en C₁ à C₂₀ substitué dans lequel un ou plusieurs atomes d'hydrogène sont remplacés par des atomes d'halogènes ; R¹ et R² peuvent également être joints en formant un noyau en C₃ à C₂₀.

3. Procédé suivant la revendication 1 ou 2, dans lequel J représente l'azote.

4. Procédé suivant la revendication 1 ou 2, dans lequel R représente un radical hydrocarbyle en C₁ à C₂₀ et R' représente un radical cyclohydrocarbyle en C₆ à C₂₀ ou un radical aromatique.

5. Procédé suivant la revendication 1, dans lequel R' représente un radical alkyle ou un radical cyclique.

6. Procédé suivant la revendication 1 ou 2, dans lequel M représente le titane.

7. Polypropylène amorphe totalement atactique, ayant une moyenne pcndérale du poids moléculaire supérieure à 200 000.

8. Polyproprylène amorphe essentiellement atactique, ayant une moyenne pondérale au poids moléculaire supérieure à 500 000.

9. polypropylène amorphe ayant une moyenne pondérale du poids moléculaire supérieure à 200 000, produit par un procédé comprenant les étapes consistant :
(i) à mettre en contact une ou plusieurs α-oléfines dans des conditions de polymérisation avec une formulation de catalyseur comprenant :
(a) un activateur consistant en un alumoxane, et
(b) un composé de métal de transition représenté par la formule : 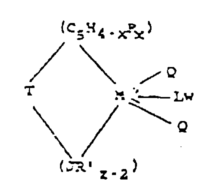 oder 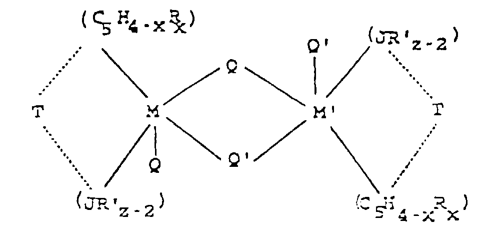 dans laquelle M représente Ti à son état d'oxydation formel le plus élevé ; M' a la même signification que M ;
(C₅H₄₋ₓRₓ) représente un noyau cyclopentadiényle qui est substitué de manière symétrique avec deux à quatre groupes R servant de substituants, "x" désignant le degré de substitution (x = 2 ou 4) et chaque radical R représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un radical halogéno, un radical amido, un radical phosphido, et un radical alkoxy ou n'importe quel autre radical contenant une fonctionnalité acide ou basique de Lewis, des radicaux métalloidiques à substituants hydrocarbyle en C₁ à C₂₀ dans lesquels le métalloïde est choisi dans le Groupe IV A du Tableau Périodique des éléments, et des radicaux halogéno, des radicaux amido, des radicaux phosphido, des radicaux alkoxy, des radicaux alkylborido, ou un radical contenant une fonctionnalité acide ou basique de Lewis, ou bien au moins deux groupes R adjacents sont joints en formant un noyau en C₄ à C₂₀, ce qui donne un ligand cyclopentadiényle polycyclique saturé ou insaturé ;
(JR'_{z-2}) représente un ligand hétéroatomique dans lequel J représente un élément ayant un indice de coordination égal à trois du Groupe V A ou un élément ayant un indice de coordination égal à deux du Groupe VI A du Tableau Périodique des Eléments, chaque groupe R' représentant, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un radical halogéno, un radical amido, un radical phosphido, et un radical alkoxy ou n'importe quel autre radical contenant une fonctionnalité acide ou basique de Lewis, et "z" représente l'indice de coordination de l'élément J ;
chaque groupe Q représente, indépendamment, un ligand anionique univalent qui ne peut être un noyau cyclopentadiényle substitué ou non substitué, ledit ligand anionique univalent étant choisi entre un halogénure, un hydrure, un radical hydrocarbyle en C₁ à C₂₀ substitué ou non substitué, alcoolate, aryloxyde, amide, arylamide, phosphure ou arylphosphure, ou bien deux groupes Q, conjointement, représentent un radical alkylidène, ou un radical hydrocarbyle cyclométallé ou n'importe quel ligand chélatant anionique divalent ; Q' a la même signification que Q ;
T représente un groupe de pontage covalent contenant un élément du Groupe IV A ou V A ;
L représente une base neutre de Lewis, "w" désignant un nombre de 0 à 3 ;
(ii) à recueillir un polypropylène amorphe ;

10. Polypropylène amorphe suivant la revendication 9, dans lequel le composé de métal de transition est un composé représenté par la formule :

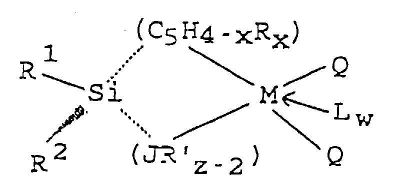

11. Polypropylène suivant la revendication 9, qui est atactique.

12. Polypropylène suivant la revendication 11, qui a une moyenne pondérale du poids moléculaire supérieure à 500 000.

13. Article ccmprenant le polypropylène selon la revendication 12.

14. Polypropylène suivant la revendication 10, qui est atactique.

15. Polypropylène suivant la revendication 10, qui a une moyenne pondérale du poids moléculaire supérieure à 500 000.

16. Article comprenant le polypropylène suivant la revendication 10.
